# EUROPEAN PATENT APPLICATION

(11) **EP 4 708 933 A1**
(43) Date of publication of application: **11.03.2026**
(21) Application number: 23935690.0
(22) Date of filing: 03.08.2023
(51) Int. Cl.: H04W 4/70, B63G 8/00, B63H 1/00, B63H 5/00, E04H 4/16, G01S 15/93, G01S 17/93, G05D 1/00, B63B 59/10, G05D 1/242, G05D 1/246, G05D 107/00, G05D 109/10, G05D 109/30, G05D 109/50, G05D 1/648, G05D 105/10, G05D 111/20, H04L 69/14, H04W 76/14, H04L 67/12

(54) **INFORMATION INTERACTION METHOD, SYSTEM AND APPARATUS, AND STORAGE MEDIUM AND ELECTRONIC APPARATUS**

(30) Priority: 04.05.2023 CN 202310490745
(71) Applicant: Xingmai Innovation Technology (Suzhou) Co., Ltd., Suzhou, Jiangsu 215000 (CN)
(72) Inventor: ZHANG, Shilei, Suzhou, Jiangsu 215124 (CN)
(74) Representative: Huang, Liwei
(86) International application number: PCT/CN2023/111089
(87) International publication number: WO 2024/227317

(57) **Abstract**

The present disclosure provides an information interaction method, system, and apparatus, a storage medium, and an electronic device. The method includes: obtaining a type of a target environment in which a target robot currently operates, where the type of the target environment includes an underwater environment and a non-underwater environment; determining a target communication mode based on the type of the target environment, where the target communication mode is used to indicate a communication mode between the target robot and a charging station; and controlling the target robot to establish a communication connection with the charging station in the target communication mode and controlling the target robot to perform information interaction with a target terminal via the charging station.

## Description

The present disclosure claims priority to Chinese Patent Application No. 202310490745X, filed with the China National Intellectual Property Administration on May 4, 2023 and entitled "INFORMATION INTERACTION METHOD, SYSTEM, AND APPARATUS, STORAGE MEDIUM, AND ELECTRONIC DEVICE", which is incorporated herein by reference in its entirety.

### TECHNICAL FIELD

The present disclosure relates to the field of communication technologies, and in particular, to an information interaction method, system, and apparatus, a storage medium, and an electronic device.

### BACKGROUND

Currently, a pool cleaning robot is increasingly widely used to clean a pool. In a related technology, when the pool cleaning robot operates in a swimming pool, a station generally communicates with the pool cleaning robot via an indoor Wi-Fi (Wireless Fidelity), so that the station and the pool cleaning robot can communicate with or transmit data to a client of a mobile device of a user. However, due to a weak ability of Wi-Fi to penetrate water, when the pool cleaning robot enters the water, a communication connection between the pool cleaning robot and the client is weak or even lost, leading to information transmission lag or an operation failure. Consequently, user experience is poor. It can be seen that the pool cleaning robot in the related technology has a single communication mode, easily leading to communication connection interruption or failure and low information interaction efficiency.

Currently, an effective solution to resolve the technical problem in the related technology that the robot has a single communication mode, leading to low information interaction efficiency has not been proposed.

### SUMMARY OF THE INVENTION

The present disclosure provides an information interaction method, system, and apparatus, a storage medium, and an electronic device, to at least resolve a technical problem in a related technology that a robot has a single communication mode, leading to low information interaction efficiency.

According to an embodiment of the present disclosure, an information interaction method is provided. The method includes: obtaining a type of a target environment in which a target robot currently operates, where the type of the target environment includes an underwater environment and a non-underwater environment; determining a target communication mode based on the type of the target environment, where the target communication mode is used to indicate a communication mode between the target robot and a charging station; and controlling the target robot to establish a communication connection with the charging station in the target communication mode and controlling the target robot to perform information interaction with a target terminal via the charging station.

In some embodiments, the determining a target communication mode based on the type of the target environment includes one of the following: determining the target communication mode as a first communication mode when the type of the target environment is the underwater environment, where the first communication mode indicates that the target robot communicates with the charging station via a target radio frequency module; and determining the target communication mode as a second communication mode when the type of the target environment is the non-underwater environment, where the second communication mode indicates that the target robot communicates with the charging station via a target network module.

In some embodiments, when the target communication mode is the first communication mode, the controlling the target robot to perform information interaction with a target terminal via the charging station includes: determining a current communication bit error rate between the target robot and the charging station; and notifying, based on the current communication bit error rate, the charging station to adjust a communication rate level and controlling the target robot to perform information interaction with the target terminal via the charging station. The target robot communicates with the charging station at a communication rate corresponding to an adjusted communication rate level.

In some embodiments, the notifying, based on the current communication bit error rate, the charging station to adjust a communication rate level includes: notifying, when the current communication bit error rate is greater than a first preset threshold, the charging station to reduce the communication rate level; and notifying, when the current communication bit error rate is less than a second preset threshold, the charging station to increase the communication rate level. The second preset threshold is less than the first preset threshold.

In some embodiments, the notifying, when the current communication bit error rate is greater than a first preset threshold, the charging station to reduce the communication rate level includes: when the current communication bit error rate is greater than a first bit error rate threshold, notifying the charging station to reduce a communication rate by one level; and when the current communication bit error rate is greater than a second bit error rate threshold, notifying the charging station to reduce the communication rate by two levels. The first preset threshold includes the first bit error rate threshold and the second bit error rate threshold. The second bit error rate threshold is greater than the first bit error rate threshold.

In some embodiments, the controlling the target robot to perform information interaction with the target terminal via the charging station includes: after the charging station is notified, based on the current communication bit error rate, to adjust the communication rate level, if the adjusted communication rate level is less than or equal to a preset level, controlling the target robot to perform instruction interaction with the target terminal via the charging station; or after the charging station is notified, based on the current communication bit error rate, to adjust the communication rate level, if the adjusted communication rate level is greater than the preset level, controlling the target robot to perform instruction and/or data interaction with the target terminal via the charging station.

In some embodiments, after the notifying, based on the current communication bit error rate, the charging station to adjust a communication rate level, the method further includes at least one of the following: when it is determined that the adjusted communication rate level is less than or equal to the preset level, prompting the target robot and the charging station that it is currently inappropriate to transmit map information; when it is determined that communication between the target robot and the charging station is disconnected, prompting the target robot and the charging station that there is a communication failure; or when it is determined that the adjusted communication rate level is greater than the preset level, prompting the target robot and the charging station that current communication is normal.

In some embodiments, the determining a target communication mode based on the type of the target environment includes: when the type of the target environment is the non-underwater environment, determining the target communication mode as a third communication mode or a fourth communication mode based on stability of a target network module. The target robot is provided with the target network module. The third communication mode indicates that the target robot communicates with the charging station via a target radio frequency module. The fourth communication mode indicates that the target robot communicates with the charging station via the target network module.

According to another embodiment of the present disclosure, another information interaction method is further provided. The method includes: when a connection request of a target robot is received, controlling a charging station to establish a communication connection with the target robot, where the connection request is used to request that the communication connection is established between the target robot and the charging station in a target communication mode, where the target communication mode is a communication mode determined by the target robot based on a type of a target environment in which the target robot currently operates, where the type of the target environment includes an underwater environment and a non-underwater environment; and receiving, in the target communication mode, first target information transmitted by the target robot and forwarding the first target information to a target terminal; and receiving second target information transmitted by the target terminal and forwarding the second target information to the target robot in the target communication mode.

In some embodiments, the receiving, in the target communication mode, first target information transmitted by the target robot and forwarding the first target information to a target terminal includes: receiving a target notification sent by the target robot, where the target notification is sent by the target robot after a current communication bit error rate between the target robot and the charging station is determined; and adjusting a communication rate level based on the target notification, receiving the first target information at a communication rate corresponding to an adjusted communication rate level, and forwarding the first target information to the target terminal.

In some embodiments, the adjusting a communication rate level based on the target notification includes: reducing the communication rate level when the target notification indicates that the current communication bit error rate is greater than a first preset threshold; and increasing the communication rate level when the target notification indicates that the current communication bit error rate is less than a second preset threshold. The second preset threshold is less than the first preset threshold.

In some embodiments, the reducing the communication rate level when the target notification indicates that the current communication bit error rate is greater than a first preset threshold includes: reducing a communication rate by one level when the target notification indicates that the current communication bit error rate is greater than a first bit error rate threshold; and reducing the communication rate by two levels when the target notification indicates that the current communication bit error rate is greater than a second bit error rate threshold. The first preset threshold includes the first bit error rate threshold and the second bit error rate threshold. The second bit error rate threshold is greater than the first bit error rate threshold.

In some embodiments, after the adjusting a communication rate level based on the target notification, the method further includes at least one of the following: when it is determined that the adjusted communication rate level is less than or equal to a preset level, prompting the target robot and the charging station that it is currently inappropriate to transmit map information; when it is determined that communication between the target robot and the charging station is disconnected, prompting the target robot and the charging station that there is a communication failure; or when it is determined that the adjusted communication rate level is greater than the preset level, prompting the target robot and the charging station that current communication is normal.

According to still another embodiment of the present disclosure, an information interaction system is further provided. The system includes: a target robot, where the target robot is configured to determine a target communication mode based on a type of a target environment in which the target robot currently operates and establish a communication connection with a charging station in the target communication mode, where the type of the target environment includes an underwater environment and a non-underwater environment; and the charging station, where the charging station is configured to perform information interaction with the target robot in the target communication mode.

According to still another embodiment of the present disclosure, an information interaction apparatus is further provided. The apparatus includes: a first obtaining module, where the first obtaining module is configured to obtain a type of a target environment in which a target robot currently operates, where the type of the target environment includes an underwater environment and a non-underwater environment; a determining module, where the determining module is configured to determine a target communication mode based on the type of the target environment, where the target communication mode is used to indicate a communication mode between the target robot and a charging station; and a first control module, where the first control module is configured to control the target robot to establish a communication connection with the charging station in the target communication mode and control the target robot to perform information interaction with a target terminal via the charging station.

According to still another embodiment of the present disclosure, an information interaction apparatus is further provided. The apparatus includes: a second control module, where the second control module is configured to when a connection request of a target robot is received, control a charging station to establish a communication connection with the target robot, where the connection request is used to request that the communication connection is established between the target robot and the charging station in a target communication mode, where the target communication mode is a communication mode determined by the target robot based on a type of a target environment in which the target robot currently operates, where the type of the target environment includes an underwater environment and a non-underwater environment; and a processing module, where the processing module is configured to receive, in the target communication mode, first target information transmitted by the target robot and forward the first target information to a target terminal; and receive second target information transmitted by the target terminal and forward the second target information to the target robot in the target communication mode.

According to still another embodiment of the present disclosure, a computer-readable storage medium is further provided. The computer-readable storage medium stores a computer program. When the computer program is run, steps in any one of the method embodiments are performed.

According to still another embodiment of the present disclosure, an electronic device is further provided. The electronic device includes a memory and a processor. The memory stores a computer program. The processor is configured to: when executing the computer program, perform steps in any one of the method embodiments.

According to the present disclosure, a type of a target environment in which a target robot currently operates is obtained. The type of the target environment includes an underwater environment and a non-underwater environment. Then, a target communication mode between the target robot and a charging station is determined based on the type of the target environment. Different communication modes are used based on different environment types. Then, the target robot is controlled to establish a communication connection with the charging station in the target communication mode and perform information interaction with a target terminal via the charging station. In other words, the target communication mode is determined based on the type of the target environment in which the target robot currently operates, the communication connection is established between the target robot and the charging station in the target communication mode, and the target robot performs information interaction with the target terminal via the charging station.

### BRIEF DESCRIPTION OF THE DRAWINGS

FIG. 1 is a block diagram of a hardware structure of a mobile terminal for performing an information interaction method according to an embodiment of the present disclosure;
FIG. 2 is a schematic flowchart of an information interaction method according to an embodiment of the present disclosure;
FIG. 3 is a schematic flowchart of another information interaction method according to an embodiment of the present disclosure;
FIG. 4 is a framework diagram of an information interaction system according to an embodiment of the present disclosure;
FIG. 5 is an architecture diagram of a communication system of a pool cleaning robot according to an embodiment of the present disclosure;
FIG. 6 is a schematic diagram of a structure of a communication connection of a pool cleaning robot according to an embodiment of the present disclosure;
FIG. 7 is a block diagram of a structure of an information interaction apparatus according to an embodiment of the present disclosure; and
FIG. 8 is a block diagram of a structure of another information interaction apparatus according to an embodiment of the present disclosure.

Reference numerals: 100: pool cleaning robot; 200: station; 300: radio frequency module; 400: client; 500: network module; 600: router; 700: remote control; 402: target robot; 404: charging station.

### DETAILED DESCRIPTION

The following further describes the present disclosure with reference to the accompanying drawings and embodiments. It may be understood that the specific embodiments described herein are merely used to explain the present disclosure, but are not intended to limit the present disclosure. In addition, it should be noted that, for ease of description, only a part but not all of a structure related to the present disclosure is shown in the accompanying drawings.

In descriptions of the present disclosure, unless otherwise expressly specified and limited, the terms such as "link", "connect", and "fasten" should be understood broadly. For example, the term "connect" may indicate a fixed connection, a detachable connection, or an integral connection, may indicate a mechanical connection or an electrical connection, or may indicate a direct connection, an indirect connection implemented through an intermediate medium, or communication between internal structures of two elements or an interaction relationship between two elements. A person of ordinary skill in the art may understand specific meanings of the foregoing terms in the present disclosure based on a specific situation.

In the present disclosure, unless otherwise expressly specified and limited, that a first feature is "above" or "below" a second feature may be that the first feature may be in direct contact with the second feature, or the first feature may be in contact with the second feature through another feature between the first feature and the second feature instead of being in direct contact with the second feature. In addition, that the first feature is "above", "on", or "over" the second feature may be that the first feature is right above or obliquely above the second feature, or may merely mean that a horizontal height of the first feature is greater than that of the second feature. That the first feature is "below", "underneath", or "under" the second feature may be that the first feature is right below or obliquely below the second feature, or may merely mean that a horizontal height of the first feature is less than that of the second feature.

In descriptions of embodiments, an orientation or position relationship indicated by terms "above", "below", "left", "right", and the like is an orientation or position relationship based on the accompanying drawings, and is only intended to facilitate descriptions and simplify operations, but is not intended to indicate or imply that an apparatus or an element needs to have a specific orientation and be constructed and operated in a specific orientation. Therefore, such terms cannot be understood as a limitation on the present disclosure. In addition, the terms "first" and "second" are merely used to distinguish in description and have no special meaning.

It should be noted that in this specification, claims, and the accompanying drawings of the present disclosure, the terms "first", "second", and the like are intended to distinguish between similar objects but do not necessarily indicate a specific order or sequence.

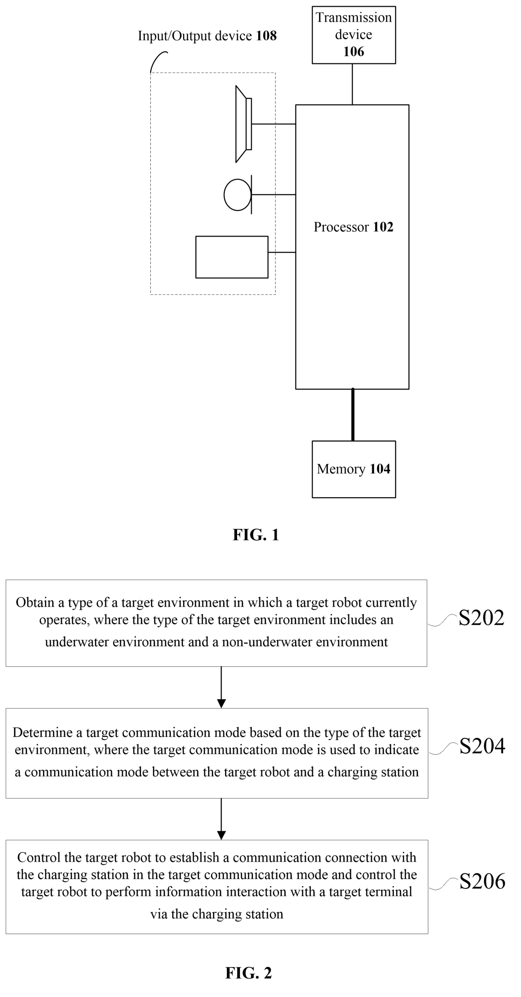

The method provided in embodiments of the present disclosure may be performed by a mobile terminal, a computer terminal, or a similar computing apparatus. An example in which the method is performed by the mobile terminal is used. FIG. 1 is a block diagram of a hardware structure of a mobile terminal for performing an information interaction method according to an embodiment of the present disclosure. As shown in FIG. 1, the mobile terminal may include one or more (only one processor is shown in FIG. 1) processors 102 (the processor 102 may include, but is not limited to, a processing apparatus such as a microprocessor unit or a field-programmable gate array FPGA) and a memory 104 configured to store data. The mobile terminal may further include a transmission device 106 with a communication function and an input/output device 108. A person skilled in the art may understand that the structure shown in FIG. 1 is only an example and does not constitute any limitation on the structure of the mobile terminal. For example, the mobile terminal may include more or fewer components than those shown in FIG. 1 or have a configuration different from that shown in FIG. 1.

The memory 104 may be configured to store a computer program, for example, a software program of an application software and modules, for example, a computer program corresponding to the information interaction method in embodiments of the present disclosure. The processor 102 executes the computer program stored in the memory 104 to execute various functional applications and data processing, that is, to implement the above method. The memory 104 may include a high-speed random access memory, a non-volatile memory, for example, one or more magnetic storage apparatuses, a flash memory, or another non-volatile solid-state memory. In some examples, the memory 104 may further include memories that are remotely provided relative to the processor 102, and these remote memories may be connected to the mobile terminal through a network. Examples of the foregoing network include, but are not limited to, the Internet, an enterprise intranet, a local area network, a mobile communication network, and a combination thereof.

The transmission device 106 is configured to receive or send data through one network. Specific examples of the network may include a wireless network provided by a communication provider of the mobile terminal. In one example, the transmission device 106 includes a network interface controller (Network Interface Controller, NIC for short) and may be connected to other network devices through a station to communicate with the Internet. In one example, the transmission device 106 may be a radio frequency (Radio Frequency, RF for short) module configured to communicate with the Internet in a wireless manner.

An embodiment provides an information interaction method. FIG. 2 is a schematic flowchart of the information interaction method according to an embodiment of the present disclosure. As shown in FIG. 2, the method may include the following steps.

Step S202: Obtain a type of a target environment in which a target robot currently operates, where the type of the target environment includes an underwater environment and a non-underwater environment.

Step S204: Determine a target communication mode based on the type of the target environment, where the target communication mode is used to indicate a communication mode between the target robot and a charging station.

Step S206: Control the target robot to establish a communication connection with the charging station in the target communication mode and control the target robot to perform information interaction with a target terminal via the charging station.

According to the above steps, a type of a target environment in which a target robot currently operates is obtained. The type of the target environment includes an underwater environment and a non-underwater environment. Then, a target communication mode between the target robot and a charging station is determined based on the type of the target environment. Different communication modes are used based on different environment types. Then, the target robot is controlled to establish a communication connection with the charging station in the target communication mode and perform information interaction with a target terminal via the charging station. In other words, the target communication mode is determined based on the type of the target environment in which the target robot currently operates, the communication connection is established between the target robot and the charging station in the target communication mode, and the target robot performs information interaction with the target terminal via the charging station. In this way, flexible communication modes are used, so that the stable communication connection can be established between the target robot and the charging station, and the target robot can maintain real-time communication with the target terminal. This avoids a problem in a related technology that the robot has a single communication mode, easily leading to communication connection interruption or failure. Therefore, a technical problem in the related technology that the robot has a single communication mode, leading to low information interaction efficiency is resolved. This improves the information interaction efficiency.

The above steps may be performed by a processor or a controller, for example, a controller or a processor of the target robot, a processor having a human-computer interaction capability and provided on a storage device, or another processing device or processing unit having a similar processing capability. However, this is not limited thereto.

In the above embodiment, the type of the target environment in which the target robot currently operates is obtained. The type of the target environment includes an underwater environment and a non-underwater environment. An example in which the target robot is a pool cleaning robot is used. Possible operating environments of the pool cleaning robot include an underwater environment and a non-underwater environment. The non-underwater environment may be a scenario in which the pool cleaning robot operates on a poolside or a scenario in which the pool cleaning robot operates on a water surface of a pool. For example, the pool cleaning robot floats on the water surface, and the pool cleaning robot may be completely or partially located on the water surface. After the type of the target environment in which the target robot currently operates is obtained, the target communication mode is determined based on the type of the target environment. The target communication mode is a communication mode between the target robot and the charging station. For example, when the type of the target environment in which the target robot (for example, the pool cleaning robot) currently operates is the non-underwater environment, it may be determined that the target communication mode is a communication mode implemented via a Wi-Fi network or a mobile communication mode, such as a 4G or 5G communication mode. When the type of the target environment in which the target robot currently operates is the underwater environment, it may be determined that the target communication mode is a communication mode implemented via a radio frequency network, such as a 433 radio frequency module or a 915 radio frequency module. Because the radio frequency module has a strong capability to penetrate water relative to the Wi-Fi network, the radio frequency module has a radio signal connection capability in water. Then, the target robot is controlled to establish a communication connection with the charging station in the target communication mode and perform information interaction with the target terminal via the charging station. For example, when the target robot operates in the non-underwater environment, the target robot may establish a communication connection with the charging station via the Wi-Fi network and then perform information interaction with the target terminal via the charging station. When the target robot operates in the underwater environment, the target robot may establish a communication connection with the charging station via the radio frequency network (for example, the 433 radio frequency module or the 915 radio frequency module) and then perform information interaction with the target terminal via the charging station, to ensure that the target robot can establish the stable communication connection with the charging station during operation, so that the target robot can maintain information interaction with the target terminal. The target terminal may be a mobile terminal, for example, a mobile phone, a tablet computer, or a PC, or another terminal, for example, a controller. According to this embodiment, flexible communication modes are used, so that the stable communication connection can be established between the target robot and the charging station, and the target robot can maintain real-time communication with the target terminal. This avoids a problem in a related technology that the robot has a single communication mode, easily leading to communication connection interruption or failure. Therefore, a technical problem in the related technology that the robot has a single communication mode, leading to low information interaction efficiency is resolved. This improves the information interaction efficiency.

In an optional embodiment, the determining a target communication mode based on the type of the target environment includes one of the following: determining the target communication mode as a first communication mode when the type of the target environment is the underwater environment, where the first communication mode indicates that the target robot communicates with the charging station via a target radio frequency module; and determining the target communication mode as a second communication mode when the type of the target environment is the non-underwater environment, where the second communication mode indicates that the target robot communicates with the charging station via a target network module.

In the above embodiment, when the type of the target environment is the underwater environment, it is determined that the target robot establishes a communication connection with the charging station in the first communication mode. The first communication mode may be a communication mode implemented via a radio frequency network, for example, a 433 radio frequency module or a 915 radio frequency module. When the type of the target environment is the non-underwater environment, it is determined that the target robot establishes a communication connection with the charging station in the second communication mode. The second communication mode may be a communication mode implemented via a Wi-Fi network or a mobile communication mode, such as a 4G or 5G communication mode. According to this embodiment, corresponding communication modes are used based on different types of target environments, to ensure that the target robot can establish stable communication connection with the charging station.

In an optional embodiment, when the target communication mode is the first communication mode, the controlling the target robot to perform information interaction with a target terminal via the charging station includes: determining a current communication bit error rate between the target robot and the charging station; and notifying, based on the current communication bit error rate, the charging station to adjust a communication rate level and controlling the target robot to perform information interaction with the target terminal via the charging station. The target robot communicates with the charging station at a communication rate corresponding to an adjusted communication rate level.

In the above embodiment, when the target robot operates in the underwater environment, the target robot is controlled to establish a communication connection with the charging station in the first communication mode. In this case, the current communication bit error rate between the target robot and the charging station may be determined, that is, a probability of an error in data transmission within a specified time period may be determined. For example, bit error rate = bit error in transmission/total quantity of bits in transmission * 100%. Then, the target robot may notify, based on the current communication bit error rate, the charging station to adjust the communication rate level, that is, adjust an over-the-air baud rate in real time. For example, when the bit error rate is high, the charging station may be notified to reduce the communication rate level, and when the bit error rate is low, the charging station may be notified to appropriately increase the communication rate level, that is, a communication rate between the target robot and the charging station is adjusted, so that the target robot can communicate with the charging station at the communication rate corresponding to the adjusted communication rate level. In this way, the target robot is controlled to perform information interaction with the target terminal via the charging station. According to this embodiment, the over-the-air baud rate is adjusted in time based on the operating environment of the target robot and current communication quality, so that utilization of a broadband is maximized.

In an optional embodiment, the notifying, based on the current communication bit error rate, the charging station to adjust a communication rate level includes: notifying, when the current communication bit error rate is greater than a first preset threshold, the charging station to reduce the communication rate level; and notifying, when the current communication bit error rate is less than a second preset threshold, the charging station to increase the communication rate level. The second preset threshold is less than the first preset threshold.

In the above embodiment, when the current communication bit error rate is greater than the first preset threshold (for example, 10%, 20%, or another value), the target robot may notify the charging station to reduce the communication rate level, and when the current communication bit error rate is less than the second preset threshold (for example, 5%, 3%, or another value), the target robot may notify the charging station to increase the communication rate level. For example, when the current communication bit error rate is greater than 10%, the target robot may notify the charging station to reduce a communication rate by one level, meaning a one-level reduction based on the current communication rate, and when the current communication bit error rate is greater than 30% (or another value), the target robot may notify the charging station to reduce the communication rate by two levels, meaning a two-level reduction based on the current communication rate. In actual application, several fixed communication rate levels may be preset. For example, when the current communication bit error rate is less than 3%, the target robot may notify the charging station to increase the communication rate by one level, meaning a one-level increase based on the current communication rate. According to this embodiment, the communication rate can be adjusted in time based on the current communication bit error rate.

In an optional embodiment, the notifying, when the current communication bit error rate is greater than a first preset threshold, the charging station to reduce the communication rate level includes: when the current communication bit error rate is greater than a first bit error rate threshold, notifying the charging station to reduce a communication rate by one level; and when the current communication bit error rate is greater than a second bit error rate threshold, notifying the charging station to reduce the communication rate by two levels. The first preset threshold includes the first bit error rate threshold and the second bit error rate threshold. The second bit error rate threshold is greater than the first bit error rate threshold.

In the above embodiment, the first bit error rate threshold may be 10% (or another value). When the current communication bit error rate is greater than 10%, the target robot may notify the charging station to reduce the communication rate by one level, meaning a one-level reduction based on the current communication rate. The second bit error rate threshold may be 30% (or another value). When the current communication bit error rate is greater than 30%, the target robot may notify the charging station to reduce the communication rate by two levels, meaning a two-level reduction based on the current communication rate. The first bit error rate threshold and the second bit error rate threshold in this embodiment may be set or adjusted based on an actual requirement. According to this embodiment, the over-the-air baud rate is adjusted based on the current communication bit error rate, so that utilization of a broadband is maximized.

In an optional embodiment, the controlling the target robot to perform information interaction with the target terminal via the charging station includes: after the charging station is notified, based on the current communication bit error rate, to adjust the communication rate level, if the adjusted communication rate level is less than or equal to a preset level, controlling the target robot to perform instruction interaction with the target terminal via the charging station; or after the charging station is notified, based on the current communication bit error rate, to adjust the communication rate level, if the adjusted communication rate level is greater than the preset level, controlling the target robot to perform instruction and/or data interaction with the target terminal via the charging station.

In the above embodiment, after the communication rate level is adjusted, if the adjusted communication rate level is less than or equal to the preset level, the target robot performs instruction interaction with the target terminal via the charging station. The target robot communicates with the charging station at the communication rate corresponding to the adjusted communication rate level, that is, when the communication rate level is less than the preset level, it is inappropriate to transmit data between the target robot and the charging station. For example, a communication rate corresponding to the preset level is 100 kb/s (or 90 kb/s or another value). Optionally, in this case, the target robot and the charging station may be prompted that it is inappropriate to transmit data (for example, map information) when the communication rate is low. After the communication rate level is adjusted, if the adjusted communication rate level is greater than the preset level, the target robot performs instruction or data interaction with the target terminal via the charging station. The target robot communicates with the charging station at the communication rate corresponding to the adjusted communication rate level, that is, when the communication rate level is greater than the preset level, an instruction and/or data may be transmitted between the target robot and the charging station. Optionally, in this case, the target robot and the charging station may be prompted that normal communication is performed. An example in which the target robot is a pool cleaning robot is used. The pool cleaning robot may forward map information of the pool to the target terminal via the charging station. In actual application, the pool cleaning robot may obtain geographic data information of the operating pool and position information of the pool cleaning robot via a sensor (for example, an ultrasonic sensor or a radar sensor) provided on the pool cleaning robot and a water pressure sensor or an automatic identification module, to construct the map information of the pool, and then forward the map information of the pool and the position information of the pool cleaning robot to the target terminal via the charging station.

In an optional embodiment, after the notifying, based on the current communication bit error rate, the charging station to adjust a communication rate level, the method further includes at least one of the following: when it is determined that the adjusted communication rate level is less than or equal to the preset level, prompting the target robot and the charging station that it is currently inappropriate to transmit map information; when it is determined that communication between the target robot and the charging station is disconnected, prompting the target robot and the charging station that there is a communication failure; or when it is determined that the adjusted communication rate level is greater than the preset level, prompting the target robot and the charging station that current communication is normal.

In the above embodiment, after the target robot notifies, based on the current communication bit error rate, the charging station to adjust the communication rate level, if it is determined that the adjusted communication rate level is less than or equal to the preset level, the target robot and the charging station are prompted that it is currently inappropriate to transmit the map information. In actual application, prompt information may be displayed on a display of the target robot to prompt that it is inappropriate to transmit the map information when the current communication rate is low. Similarly, the charging station may be prompted to send the prompt information to prompt that it is inappropriate to transmit the map information when the current communication rate is low. For example, a communication rate corresponding to the preset level is 100 kb/s (or 90 kb/s or another value). Optionally, when it is determined that communication between the target robot and the charging station is disconnected, the target robot and the charging station may be prompted that there is a communication failure. For example, in this case, the prompt information indicating that current communication fails may be displayed on the display of the target robot or may be displayed on a display of the charging station. Optionally, when it is determined that the adjusted communication rate level is greater than the preset level, the target robot and the charging station are prompted that current communication is normal. For example, in this case, prompt information may be displayed on the display of the target robot to prompt that current communication is normal. Similarly, the charging station may be prompted to send the prompt information to prompt that current communication is normal. Optionally, in this case, the target robot may transmit the map information to the charging station and forward the map information to the target terminal (for example, a client) via the charging station, so that the map information can be displayed on the client in real time.

In an optional embodiment, the determining a target communication mode based on the type of the target environment includes: when the type of the target environment is the non-underwater environment, determining the target communication mode as a third communication mode or a fourth communication mode based on stability of a target network module. The target robot is provided with the target network module. The third communication mode indicates that the target robot communicates with the charging station via a target radio frequency module. The fourth communication mode indicates that the target robot communicates with the charging station via the target network module.

In the above embodiment, when the target robot operates in the non-underwater environment, the target robot may select the target communication mode based on the stability of the target network module. For example, when the target network module (for example, a Wi-Fi module) satisfies a stability requirement, that is, when the stability of the target network module is high, the target communication mode is determined as the fourth communication mode, that is, the target robot communicates with the charging station via the target network module. The target communication mode may alternatively be determined based on whether current received signal strength of the target network module satisfies a preset condition (for example, whether the current received signal strength reaches a preset signal strength threshold). For example, if the current received signal strength of the target network module reaches the preset signal strength threshold, the target robot communicates with the charging station via the target network module. In contrast, when the stability of the target network module is poor, or when the current received signal strength of the target network module does not reach the preset signal strength threshold, the target communication mode is determined as the third communication mode. For example, the target robot communicates with the charging station via another communication module (for example, the target radio frequency module).

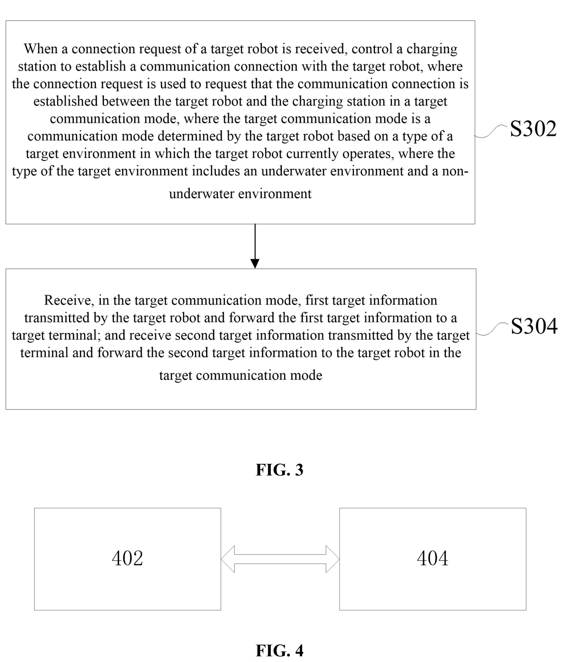

An embodiment provides another information interaction method. FIG. 3 is a schematic flowchart of another information interaction method according to an embodiment of the present disclosure. As shown in FIG. 3, the method may include the following steps.

Step S302: When a connection request of a target robot is received, control a charging station to establish a communication connection with the target robot, where the connection request is used to request that the communication connection is established between the target robot and the charging station in a target communication mode, where the target communication mode is a communication mode determined by the target robot based on a type of a target environment in which the target robot currently operates, where the type of the target environment includes an underwater environment and a non-underwater environment.

Step S304: Receive, in the target communication mode, first target information transmitted by the target robot and forward the first target information to a target terminal; and receive second target information transmitted by the target terminal and forward the second target information to the target robot in the target communication mode.

According to the above steps, when the connection request of the target robot used to request that the communication connection is established between the target robot and the charging station in the target communication mode is received, the charging station is controlled to establish the communication connection with the target robot. The target communication mode is a communication mode determined by the target robot based on the type of the target environment in which the target robot currently operates. The type of the target environment includes the underwater environment and the non-underwater environment. Then, the first target information transmitted by the target robot is received in the target communication mode, and the first target information is forwarded to the target terminal; and the second target information transmitted by the target terminal is received, and the second target information is forwarded to the target robot in the target communication mode. In other words, the target robot determines the target communication mode based on the type of the target environment in which the target robot currently operates, and the communication connection is established between the target robot and the charging station in the target communication mode; and then the first target information transmitted by the target robot is received in the target communication mode and forwarded to the target terminal, and the received second target information transmitted by the target terminal is forwarded to the target robot. In this way, it can be ensured that the target robot can perform information interaction with the target terminal in different types of target environments. This avoids a problem in a related technology that the robot has a single communication mode, easily leading to communication connection interruption or failure. Therefore, a technical problem in the related technology that the robot has a single communication mode, leading to low information interaction efficiency is resolved. This improves the information interaction efficiency.

The above steps may be performed by a controller, a communication apparatus, or a terminal, for example, the charging station, a controller of the charging station, a processor having a human-computer interaction capability and provided on a storage device, or another processing device or processing unit having a similar processing capability. However, this is not limited thereto.

In the above embodiment, the charging station receives the connection request of the target robot. The connection request is used to request that the communication connection is established between the target robot and the charging station in the target communication mode. The target communication mode is a communication mode determined by the target robot based on the type of the target environment in which the target robot currently operates. An example in which the target robot is a pool cleaning robot is used. Possible operating environments of the pool cleaning robot include an underwater environment and a non-underwater environment. For example, when the type of the target environment in which the target robot (for example, the pool cleaning robot) currently operates is the non-underwater environment, it may be determined that the target communication mode is a communication mode implemented via a Wi-Fi network or a mobile communication mode, such as a 4G or 5G communication mode. When the type of the target environment in which the target robot currently operates is the underwater environment, it may be determined that the target communication mode is a communication mode implemented via a radio frequency network, such as a 433 radio frequency module or a 915 radio frequency module. Because the radio frequency module has a strong capability to penetrate water relative to the Wi-Fi network, the radio frequency module has a radio signal connection capability in water. When the charging station receives the connection request, the charging station is controlled to establish the communication connection with the target robot, receive, in the target communication mode, the first target information transmitted by the target robot and forward the first target information to the target terminal, and forward, to the target robot, the received second target information transmitted by the target terminal. For example, when the target robot operates in the non-underwater environment, the first target information transmitted by the target robot may be received via the Wi-Fi network and forwarded to the target terminal, and when receiving the second target information transmitted by the target terminal, the charging station may also forward the received second target information to the target robot via the Wi-Fi network. In this way, the target robot can perform information interaction with the target terminal. When the target robot operates in the underwater environment, the first target information transmitted by the target robot may be received via the radio frequency network (for example, the 433 radio frequency module or the 915 radio frequency module) and forwarded to the target terminal, and when receiving the second target information transmitted by the target terminal, the charging station may also forward the received second target information to the target robot via the radio frequency network (for example, the 433 radio frequency module or the 915 radio frequency module). In this way, it can be ensured that the target robot can perform information interaction with the target terminal in different types of target environments. According to this embodiment, flexible communication modes are used, so that the stable communication connection can be established between the target robot and the charging station, and the target robot can maintain real-time communication with the target terminal. This avoids a problem in a related technology that the robot has a single communication mode, easily leading to communication connection interruption or failure. Therefore, a technical problem in the related technology that the robot has a single communication mode, leading to low information interaction efficiency is resolved. This improves the information interaction efficiency.

In an optional embodiment, the receiving, in the target communication mode, first target information transmitted by the target robot and forwarding the first target information to a target terminal includes: receiving a target notification sent by the target robot, where the target notification is sent by the target robot after a current communication bit error rate between the target robot and the charging station is determined; and adjusting a communication rate level based on the target notification, receiving the first target information at a communication rate corresponding to an adjusted communication rate level, and forwarding the first target information to the target terminal.

In the above embodiment, the target robot may send the target notification to the charging station based on the current communication bit error rate between the target robot and the charging station. For example, a probability of an error in data transmission within a specified time period may be determined. For example, bit error rate = bit error in transmission/total quantity of bits in transmission * 100%. Then, the charging station may be notified, based on the current communication bit error rate, to adjust the communication rate level, that is, adjust an over-the-air baud rate in real time. For example, when the bit error rate is high, the charging station may be notified to reduce the communication rate level, and when the bit error rate is low, the charging station may be notified to appropriately increase the communication rate level. In this way, the charging station can adjust the communication rate level based on the target notification, receive the first target information at the communication rate corresponding to the adjusted communication rate level, and forward the first target information to the target terminal. In this way, the target robot can perform information interaction with the target terminal via the charging station.

In an optional embodiment, the adjusting a communication rate level based on the target notification includes: reducing the communication rate level when the target notification indicates that the current communication bit error rate is greater than a first preset threshold; and increasing the communication rate level when the target notification indicates that the current communication bit error rate is less than a second preset threshold. The second preset threshold is less than the first preset threshold.

In the above embodiment, if the target notification indicates that the current communication bit error rate is greater than the first preset threshold (for example, 10%, 20%, or another value), the charging station may reduce the communication rate level, and if the target notification indicates that the current communication bit error rate is less than the second preset threshold (for example, 5%, 3%, or another value), the charging station may increase the communication rate level. For example, when the current communication bit error rate is greater than 10%, the charging station may reduce a communication rate by one level, meaning a one-level reduction based on the current communication rate, and when the current communication bit error rate is greater than 30% (or another value), the charging station may reduce the communication rate by two levels, meaning a two-level reduction based on the current communication rate. In actual application, several fixed communication rate levels may be preset. For example, when the current communication bit error rate is less than 3%, the charging station may increase the communication rate by one level, meaning a one-level increase based on the current communication rate. According to this embodiment, the communication rate can be adjusted in time based on the current communication bit error rate.

In an optional embodiment, the reducing the communication rate level when the target notification indicates that the current communication bit error rate is greater than a first preset threshold includes: reducing a communication rate by one level when the target notification indicates that the current communication bit error rate is greater than a first bit error rate threshold; and reducing the communication rate by two levels when the target notification indicates that the current communication bit error rate is greater than a second bit error rate threshold. The first preset threshold includes the first bit error rate threshold and the second bit error rate threshold. The second bit error rate threshold is greater than the first bit error rate threshold.

In the above embodiment, the first bit error rate threshold may be 10% (or another value). If the target notification indicates that the current communication bit error rate is greater than 10%, the charging station may reduce the communication rate by one level, meaning a one-level reduction based on the current communication rate. The second bit error rate threshold may be 30% (or another value). If the target notification indicates that the current communication bit error rate is greater than 30%, the charging station may reduce the communication rate by two levels, meaning a two-level reduction based on the current communication rate. The first bit error rate threshold and the second bit error rate threshold in this embodiment may be set or adjusted based on an actual requirement. According to this embodiment, the over-the-air baud rate is adjusted based on the current communication bit error rate, so that utilization of a broadband is maximized.

In an optional embodiment, after the adjusting a communication rate level based on the target notification, the method further includes at least one of the following: when it is determined that the adjusted communication rate level is less than or equal to a preset level, prompting the target robot and the charging station that it is currently inappropriate to transmit map information; when it is determined that communication between the target robot and the charging station is disconnected, prompting the target robot and the charging station that there is a communication failure; or when it is determined that the adjusted communication rate level is greater than the preset level, prompting the target robot and the charging station that current communication is normal.

In the above embodiment, after the charging station adjusts the communication rate level based on the target notification, if it is determined that the adjusted communication rate level is less than or equal to the preset level, the target robot and the charging station are prompted that it is currently inappropriate to transmit the map information. In actual application, prompt information may be displayed on a display of the target robot to prompt that it is inappropriate to transmit the map information when the current communication rate is low. Similarly, the charging station may be prompted to send the prompt information to prompt that it is inappropriate to transmit the map information when the current communication rate is low. For example, a communication rate corresponding to the preset level is 100 kb/s (or 90 kb/s or another value). Optionally, when it is determined that communication between the target robot and the charging station is disconnected, the target robot and the charging station may be prompted that there is a communication failure. For example, in this case, the prompt information indicating that current communication fails may be displayed on the display of the target robot or may be displayed on a display of the charging station. Optionally, when it is determined that the adjusted communication rate level is greater than the preset level, the target robot and the charging station are prompted that current communication is normal. For example, in this case, prompt information may be displayed on the display of the target robot to prompt that current communication is normal. Similarly, the charging station may be prompted to send the prompt information to prompt that current communication is normal. Optionally, in this case, the target robot may transmit the map information to the charging station and forward the map information to the target terminal (for example, a client) via the charging station, so that the map information can be displayed on the client in real time.

An embodiment further provides an information interaction system. FIG. 4 is a framework diagram of an information interaction system according to an embodiment of the present disclosure. As shown in FIG. 4, the system includes: a target robot 402, where the target robot is configured to determine a target communication mode based on a type of a target environment in which the target robot currently operates and establish a communication connection with a charging station 404 in the target communication mode, where the type of the target environment includes an underwater environment and a non-underwater environment; and the charging station 404, where the charging station is configured to perform information interaction with the target robot 402 in the target communication mode.

The target robot 402 may be provided with a target network module and a target radio frequency module. For example, the target network module may be a Wi-Fi module or a mobile communication module, such as a 4G or 5G communication module, and the target radio frequency module may be a 433 radio frequency module or a 915 radio frequency module. Similarly, the charging station 404 may also be provided with the same target network module and the same target radio frequency module. When the target robot 402 operates in an underwater environment, a communication connection may be established between the target robot 402 and the charging station 404 via the target radio frequency modules, and when the target robot 402 operates in a non-underwater environment, a communication connection may be established between the target robot 402 and the charging station 404 via the target network modules.

It is clear that the described embodiments are merely some but not all of embodiments of the present disclosure. The following specifically describes the present disclosure with reference to embodiments.

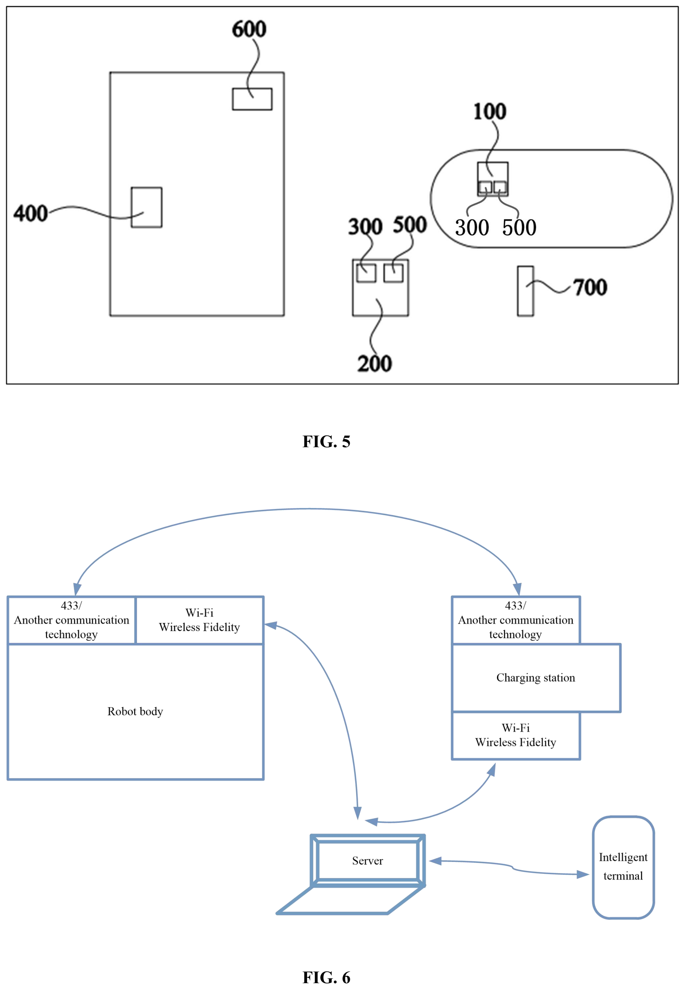

An embodiment of the present disclosure provides a communication system of a pool cleaning robot. FIG. 5 is an architecture diagram of a communication system of a pool cleaning robot according to an embodiment of the present disclosure. The system includes a pool cleaning robot 100, a station 200, a radio frequency module 300, a client 400, a network module 500, a router 600, and a remote control 700.

With development of science and technology, the pool cleaning robot 100 is widely applicable. Currently, the pool cleaning robot 100 is widely used to clean a swimming pool. In the related technology, the pool cleaning robot 100 (equivalent to the target robot) is connected to a Wi-Fi network (equivalent to the target network module) of a residence of a user, and the station 200 (equivalent to the charging station) is configured to charge and clean the pool cleaning robot 100 is also connected to the Wi-Fi network. Due to a weak ability of Wi-Fi to penetrate water, when the pool cleaning robot 100 enters the water, a communication connection between the pool cleaning robot and the client 400 (equivalent to the target terminal) is weak or even lost, leading to information transmission lag or an operation failure. Consequently, user experience is poor. According to the communication system of the pool cleaning robot provided in this embodiment of the present disclosure, when the pool cleaning robot 100 operates in water, the radio frequency module 300 (equivalent to the target radio frequency module) of the pool cleaning robot may establish a communication connection with the radio frequency module 300 of the station 200, and the station 200 establishes a connection with the client 400 via the network module 500 (equivalent to the target network module) provided on the station. The network module 500 may be a Wi-Fi module or a mobile communication module, such as a 4G communication module or a 5G communication module. In this case, the Wi-Fi network may be provided via the router 600 provided in the residence or workplace of the user, and the client 400 and the station 200 are simultaneously connected to the Wi-Fi network. Therefore, a stable Wi-Fi environment can be provided. In this way, when the pool cleaning robot 100 operates in water, the pool cleaning robot can also interact with the client 400. Optionally, the remote control 700 may be further provided to control the pool cleaning robot to operate. It should be noted that the remote control 700 in this system is not mandatory and may be configured based on a requirement.

An embodiment provides a communication connection method of a pool cleaning robot 100. Each of the pool cleaning robot 100 and a station 200 is provided with a radio frequency module 300, and each of the station 200 and a client 400 is provided with a network module 500. The communication connection method of the pool cleaning robot 100 includes: The station 200 is in communication connection with the client 400 via the network modules 500, and the pool cleaning robot 100 is in communication connection with the station 200 via the radio frequency modules 300. According to this method, the radio frequency module 300 having a strong ability to penetrate water and a radio signal connection ability is used, so that it can be ensured that the pool cleaning robot 100 establishes a stable communication connection with the station 200 during operation, enabling the client 400 connected to the station 200 via the network modules 500 to know an operation status of the pool cleaning robot 100 at any time. In this way, the pool cleaning robot can maintain real-time communication with the client 400, so that a user can conveniently send control information to the pool cleaning robot 100. This improves user experience and satisfaction.

Specifically, a client APP corresponding to the pool cleaning robot 100 may be installed on a mobile device of the user, and the mobile device herein may be a mobile phone, an iPad, or a computer of the client 400.

Optionally, the radio frequency module 300 may be a 433 radio frequency module 300 or a 915 radio frequency module 300. The 433 radio frequency module 300 or the 915 radio frequency module 300 is a conventional radio frequency module 300 with high signal connection stability and high ability to penetrate water. The network module 500 is a Wi-Fi module or a mobile communication module, such as a 4G/5G communication module.

When the network module 500 is a Wi-Fi module, a router 600 is provided in a residence of the user to provide a Wi-Fi network, and the client 400 and the station 200 are simultaneously connected to the Wi-Fi network to provide a stable Wi-Fi environment.

In addition, the pool cleaning robot 100 is further provided with the network module 500. The pool cleaning robot 100 selects, based on an operation mode of the pool cleaning robot, the radio frequency module 300 or the network module 500 to be in communication connection with the station 200, leading to a more flexible connection between the pool cleaning robot 100 and the station 200. In this way, the user can select an appropriate communication mode based on a use requirement.

Optionally, when the pool cleaning robot 100 operates in an underwater environment, the pool cleaning robot 100 is in communication connection with the station 200 via the radio frequency modules 300, so that a stable communication connection between the pool cleaning robot 100 and the station 200 can be ensured when the pool cleaning robot 100 operates underwater. Further, because the radio frequency module 300 has a limited traffic transmission capacity, when the pool cleaning robot 100 is in communication connection with the station 200 via the radio frequency modules 300, the radio frequency modules 300 can only transmit control information between the client 400 and the pool cleaning robot at this stage, so that the client 400 can flexibly control the pool cleaning robot 100, and a transmitted information flow is small with high stability.

When the pool cleaning robot 100 operates in a non-underwater environment, the pool cleaning robot 100 chooses to use the network module 500 or the radio frequency module 300 based on stability of the network module 500. For ease of description, the network module 500 is described as a Wi-Fi module herein. When the pool cleaning robot 100 operates in the non-underwater environment, the pool cleaning robot is in stable communication connection with Wi-Fi of the router 600. In this case, the pool cleaning robot 100 is directly connected to the client 400 via the Wi-Fi network. According to the communication connection method implemented via the network module 500, a coverage area is large, and a large amount of traffic information can be stably transmitted. Specifically, when the pool cleaning robot 100 is in communication connection with the station 200 via the network modules 500, control information and data information may be transmitted between the client 400 and the pool cleaning robot 100. For example, when the pool cleaning robot 100 obtains a large amount of underwater map information, the underwater map information may be transmitted via the Wi-Fi network between the pool cleaning robot 100 and the station 200. If a Wi-Fi signal of the pool cleaning robot 100 is weak, and a stable connection cannot be formed, the pool cleaning robot 100 is still connected to the station 200 via the radio frequency modules 300.

In addition, the pool cleaning robot 100 may be configured with a remote control 700. The remote control 700 is provided with a radio frequency module 300 (not shown in FIG. 5). The pool cleaning robot 100 is in communication connection with the remote control 700 via the radio frequency modules 300. When the communication between the client 400 and the pool cleaning robot 100 is unstable, or the user is not convenient to use the client 400 to control the pool cleaning robot 100, the user may use the remote control 700 to control the pool cleaning robot, to ensure that the user can control the pool cleaning robot 100 in various manners, so that it can be ensured that the user can know an operation status of the pool cleaning robot 100 in real time and control the pool cleaning robot in real time. This helps improve user experience.

FIG. 6 is a schematic diagram of a structure of a communication connection of a pool cleaning robot according to an embodiment of the present disclosure. As shown in FIG. 6, a short-range communication module (for example, a 433 MHz communication module, a 915 MHz communication module, or a module of another short-range communication mode) is provided on each of the station (or referred to as the charging station) and the pool cleaning robot (or referred to as the robot for short) to implement communication relay between the robot and the Internet. In this way, the robot can perform data interaction with the Internet in water.

When the robot (for example, a swimming pool cleaning robot) operates in water, the robot performs data interaction with the (charging) station through a short-range wireless transmission technology, and the station obtains or sends related data to the Internet via the Wi-Fi module, so that an intelligent terminal (or referred to as the client) can monitor and control in real time a status of the robot operating in water.

The 433 MHz, 915 MHz, or another short-range communication module needs to be integrated on each of the charging station and the robot, and a Wi-Fi/2G/3G/4G/5G communication module also needs to be integrated on the charging station, so that the charging station and the robot can perform data interaction with the Internet.

In embodiments of the present disclosure, relaying is performed via the station (or referred to as the charging station), so that the pool cleaning robot can access the network in real time in water. In this way, when the pool cleaning robot operates in water, the intelligent terminal (for example, a mobile phone) can obtain and control a real-time status of the pool cleaning robot.

An embodiment of the present disclosure further provides an underwater wireless communication method. When an operating environment of a pool cleaning robot (or referred to as a robot for short) changes, an over-the-air baud rate is adjusted in real time, so that utilization of a broadband is maximized, and map information can also be stably transmitted.

The following describes this embodiment. When the operating environment of the robot changes, communication may fail, or a bit error rate may be increased. In this embodiment, the over-the-air baud rate may be adjusted in real time based on a communication bit error rate to improve utilization of a broadband.

During wireless communication, the robot sends data to the station. After the robot sends the whole packet of data, the station needs to reply to the robot after receiving the data. When a wireless communication bit error rate is greater than a first threshold (corresponding to the first bit error rate threshold, for example 10% or another value), the robot notifies the station to reduce a wireless communication rate by one level. When the wireless communication bit error rate is greater than a second threshold (corresponding to the second bit error rate threshold, for example 30% or another value), the robot notifies the station to reduce the wireless communication rate by two levels. When the communication bit error rate is less than 3% (corresponding to the second preset threshold), the robot notifies the station to increase the wireless communication rate by one level. If a bit error rate of a high-level communication rate is greater than 10%, but a bit error rate of a low-level communication rate is consistently less than 3%, the map information is transmitted once at the low-level communication rate, and then the wireless communication rate is switched, to ensure that the map information can be transmitted normally. The first threshold and the second threshold may be adjusted based on an actual application requirement.

If the wireless communication rate is less than a level, the robot and the station may be prompted that it is inappropriate to transmit the map information when the communication rate is low, that is, only an instruction is transmitted. If the wireless communication is completely disconnected, the robot and the station may be prompted that there is a communication failure. If the wireless communication rate is normal, the map information is displayed on a client in real time, and the robot and the station may be prompted that normal communication is performed.

It should be noted that the foregoing shows and describes basic principles and main features of the present disclosure and advantages of the present disclosure. A person skilled in the art should understand that the present disclosure is not limited to the foregoing embodiments, the foregoing embodiments and this specification only describe principles of the present disclosure, and various changes and modifications may be made to the present disclosure without departing from the spirit and scope of the present disclosure. These changes and modifications fall within the protection scope claimed in the present disclosure. The protection scope claimed in the present disclosure is defined by the appended claims and equivalents thereof.

Based on the foregoing descriptions of the implementations, a person skilled in the art may clearly understand that the methods in the above embodiments may be implemented by software in addition to a necessary universal hardware platform or by hardware only. In many cases, the former is a preferred implementation. Based on such understanding, the technical solutions of the present disclosure can be essentially or the part that contributes to the related technology may be embodied in a form of a software product. This computer software product is stored in a storage medium (for example, a ROM/RAM, a magnetic disk, or a compact disc), and includes several instructions for instructing a terminal device (which may be a mobile phone, a computer, a server, or a network device) to perform the methods described in embodiments of the present disclosure.

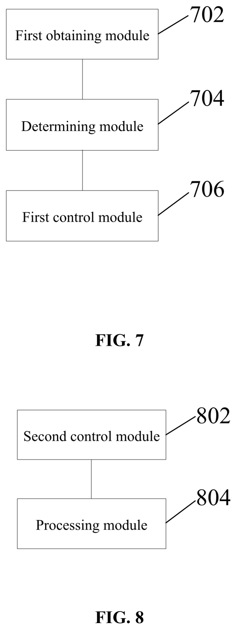

An embodiment further provides an information interaction apparatus. FIG. 7 is a block diagram of a structure of an information interaction apparatus according to an embodiment of the present disclosure. As shown in FIG. 7, the apparatus includes: a first obtaining module 702, where the first obtaining module is configured to obtain a type of a target environment in which a target robot currently operates, where the type of the target environment includes an underwater environment and a non-underwater environment; a determining module 704, where the determining module is configured to determine a target communication mode based on the type of the target environment, where the target communication mode is used to indicate a communication mode between the target robot and a charging station; and a first control module 706, where the first control module is configured to control the target robot to establish a communication connection with the charging station in the target communication mode and control the target robot to perform information interaction with a target terminal via the charging station.

In an optional embodiment, the determining module 704 includes one of the following: a first determining sub-module, where the determining sub-module is configured to determine the target communication mode as a first communication mode when the type of the target environment is the underwater environment, where the first communication mode indicates that the target robot communicates with the charging station via a target radio frequency module; and a second determining sub-module, where the second determining sub-module is configured to determine the target communication mode as a second communication mode when the type of the target environment is the non-underwater environment, where the second communication mode indicates that the target robot communicates with the charging station via a target network module.

In an optional embodiment, the first control module 706 includes: a third determining sub-module, where the third determining sub-module is configured to determine a current communication bit error rate between the target robot and the charging station when the target communication mode is the first communication mode; and a control sub-module, where the control sub-module is configured to notify, based on the current communication bit error rate, the charging station to adjust a communication rate level and control the target robot to perform information interaction with the target terminal via the charging station. The target robot communicates with the charging station at a communication rate corresponding to an adjusted communication rate level.

In an optional embodiment, the control sub-module includes: a first notification unit, where the first notification unit is configured to notify, when the current communication bit error rate is greater than a first preset threshold, the charging station to reduce the communication rate level; and a second notification unit, where the second notification unit is configured to notify, when the current communication bit error rate is less than a second preset threshold, the charging station to increase the communication rate level. The second preset threshold is less than the first preset threshold.

In an optional embodiment, the first notification unit includes: a first notification sub-unit, where the first notification sub-unit is configured to when the current communication bit error rate is greater than a first bit error rate threshold, notify the charging station to reduce a communication rate by one level; and a second notification sub-unit, where the second notification sub-unit is configured to when the current communication bit error rate is greater than a second bit error rate threshold, notify the charging station to reduce the communication rate by two levels. The first preset threshold includes the first bit error rate threshold and the second bit error rate threshold. The second bit error rate threshold is greater than the first bit error rate threshold.

In an optional embodiment, the control sub-module includes: a first processing unit, where the first processing unit is configured to after the charging station is notified, based on the current communication bit error rate, to adjust the communication rate level, if the adjusted communication rate level is less than or equal to a preset level, control the target robot to perform instruction interaction with the target terminal via the charging station; and a second processing unit, where the second processing unit is configured to after the charging station is notified, based on the current communication bit error rate, to adjust the communication rate level, if the adjusted communication rate level is greater than the preset level, control the target robot to perform instruction and/or data interaction with the target terminal via the charging station.

An embodiment further provides another information interaction apparatus. FIG. 8 is a block diagram of a structure of another information interaction apparatus according to an embodiment of the present disclosure. As shown in FIG. 8, the apparatus includes: a second control module 802, where the second control module is configured to when a connection request of a target robot is received, control a charging station to establish a communication connection with the target robot, where the connection request is used to request that the communication connection is established between the target robot and the charging station in a target communication mode, where the target communication mode is a communication mode determined by the target robot based on a type of a target environment in which the target robot currently operates, where the type of the target environment includes an underwater environment and a non-underwater environment; and a processing module 804, where the processing module is configured to receive, in the target communication mode, first target information transmitted by the target robot and forward the first target information to a target terminal; and receive second target information transmitted by the target terminal and forward the second target information to the target robot in the target communication mode.

In an optional embodiment, the processing module 804 includes: a receiving sub-module, where the receiving sub-module is configured to receive a target notification sent by the target robot, where the target notification is sent by the target robot after a current communication bit error rate between the target robot and the charging station is determined; and an adjustment sub-module, where the adjustment sub-module is configured to adjust a communication rate level based on the target notification, receive the first target information at a communication rate corresponding to an adjusted communication rate level, and forward the first target information to the target terminal.

In an optional embodiment, the adjustment sub-module includes: a first adjustment unit, where the first adjustment unit is configured to reduce the communication rate level when the target notification indicates that the current communication bit error rate is greater than a first preset threshold; and a second adjustment unit, where the second adjustment unit is configured to increase the communication rate level when the target notification indicates that the current communication bit error rate is less than a second preset threshold. The second preset threshold is less than the first preset threshold.

In an optional embodiment, the first adjustment unit includes: a first adjustment sub-unit, where the first adjustment sub-unit is configured to reduce a communication rate by one level when the target notification indicates that the current communication bit error rate is greater than a first bit error rate threshold; and a second adjustment sub-unit, where the second adjustment sub-unit is configured to reduce the communication rate by two levels when the target notification indicates that the current communication bit error rate is greater than a second bit error rate threshold. The first preset threshold includes the first bit error rate threshold and the second bit error rate threshold. The second bit error rate threshold is greater than the first bit error rate threshold.

It should be noted that each module may be implemented by software or hardware, and for the latter, it may be implemented in the following manner: All modules are located in a same processor, or various modules are located in different processors respectively in a form of any combination. However, this is not limited thereto.

An embodiment of the present disclosure further provides a computer-readable storage medium. The computer-readable storage medium stores a computer program. When the computer program is run, steps in any one of the method embodiments are performed.

In some embodiments, the computer-readable storage medium may include, but is not limited to, any medium that can store the computer program, for example, a USB flash drive, a read-only memory (Read-Only Memory, ROM for short), a random access memory (Random Access Memory, RAM for short), a removable hard disk, a magnetic disk, or a compact disc.

An embodiment of the present disclosure further provides an electronic device. The electronic device includes a memory and a processor. The memory stores a computer program. The processor is configured to: when executing the computer program, perform steps in any one of the method embodiments.

In some embodiments, the electronic device may further include a transmission device and an input/output device. The transmission device is connected to the processor, and the input/output device is connected to the processor.

For details of specific examples in this embodiment, refer to the examples described in the above embodiments and example implementations. Details are not described in this

### embodiment again.

It is clear that a person skilled in the art should understand that the modules or steps in the present disclosure may be implemented by a general-purpose computing apparatus, and the modules may be integrated on a single computing apparatus or distributed on a network including a plurality of computing apparatuses, or may be implemented by program code executed by a computing apparatus. In this way, the program code can be stored in a storage apparatus and executed by the computing apparatus. In addition, in some cases, the shown or described steps may be performed in an order different from the above order, or the modules are respectively manufactured into various integrated circuit modules, or a plurality of modules are manufactured into a single integrated circuit module. In this way, the present disclosure is not limited to any particular combination of hardware and software.

The foregoing descriptions are merely optional embodiments of the present disclosure, but are not intended to limit the present disclosure. For a person skilled in the art, the present disclosure may have various modifications and variations. Any modification, equivalent replacement, improvement, or the like made without departing from the principle of the present disclosure shall fall within the protection scope of the present disclosure.

## Claims

1. An information interaction method, comprising:
obtaining a type of a target environment in which a target robot currently operates, wherein the type of the target environment includes an underwater environment or a non-underwater environment;
determining a target communication mode based on the type of the target environment, wherein the target communication mode is used to indicate a communication mode between the target robot and a charging station; and
controlling the target robot to establish a communication connection with the charging station in the target communication mode and controlling the target robot to perform information interaction with a target terminal via the charging station.

2. The method according to claim 1, wherein the determining a target communication mode based on the type of the target environment comprises one of the following:
determining the target communication mode as a first communication mode when the type of the target environment is the underwater environment, wherein the first communication mode indicates that the target robot communicates with the charging station via a target radio frequency module; and
determining the target communication mode as a second communication mode when the type of the target environment is the non-underwater environment, wherein the second communication mode indicates that the target robot communicates with the charging station via a target network module.

3. The method according to claim 2, wherein when the target communication mode is the first communication mode, the controlling the target robot to perform information interaction with a target terminal via the charging station comprises:
determining a current communication bit error rate between the target robot and the charging station; and
notifying, based on the current communication bit error rate, the charging station to adjust a communication rate level and controlling the target robot to perform information interaction with the target terminal via the charging station, wherein the target robot communicates with the charging station at a communication rate corresponding to an adjusted communication rate level.

4. The method according to claim 3, wherein the notifying, based on the current communication bit error rate, the charging station to adjust a communication rate level comprises:
notifying, when the current communication bit error rate is greater than a first preset threshold, the charging station to reduce the communication rate level; and
notifying, when the current communication bit error rate is less than a second preset threshold, the charging station to increase the communication rate level, wherein the second preset threshold is less than the first preset threshold.

5. The method according to claim 4, wherein the notifying, when the current communication bit error rate is greater than a first preset threshold, the charging station to reduce the communication rate level comprises:
when the current communication bit error rate is greater than a first bit error rate threshold, notifying the charging station to reduce a communication rate by one level; and
when the current communication bit error rate is greater than a second bit error rate threshold, notifying the charging station to reduce the communication rate by two levels, wherein the first preset threshold comprises the first bit error rate threshold and the second bit error rate threshold, wherein the second bit error rate threshold is greater than the first bit error rate threshold.

6. The method according to claim 3, wherein the controlling the target robot to perform information interaction with the target terminal via the charging station comprises:
after the charging station is notified, based on the current communication bit error rate, to adjust the communication rate level, if the adjusted communication rate level is less than or equal to a preset level, controlling the target robot to perform instruction interaction with the target terminal via the charging station; or
after the charging station is notified, based on the current communication bit error rate, to adjust the communication rate level, if the adjusted communication rate level is greater than the preset level, controlling the target robot to perform instruction and/or data interaction with the target terminal via the charging station.

7. The method according to any one of claims 3 to 6, wherein after the notifying, based on the current communication bit error rate, the charging station to adjust a communication rate level, the method further comprises at least one of the following:
when it is determined that the adjusted communication rate level is less than or equal to the preset level, prompting the target robot and the charging station that it is currently inappropriate to transmit map information;
when it is determined that communication between the target robot and the charging station is disconnected, prompting the target robot and the charging station that there is a communication failure; or
when it is determined that the adjusted communication rate level is greater than the preset level, prompting the target robot and the charging station that current communication is normal.

8. The method according to claim 1, wherein the determining a target communication mode based on the type of the target environment comprises:
when the type of the target environment is the non-underwater environment, determining the target communication mode as a third communication mode or a fourth communication mode based on stability of a target network module, wherein the target robot is provided with the target network module, the third communication mode indicates that the target robot communicates with the charging station via a target radio frequency module, and the fourth communication mode indicates that the target robot communicates with the charging station via the target network module.

9. An information interaction method, comprising:
when a connection request of a target robot is received, controlling a charging station to establish a communication connection with the target robot, wherein the connection request is used to request that the communication connection is established between the target robot and the charging station in a target communication mode, wherein the target communication mode is a communication mode determined by the target robot based on a type of a target environment in which the target robot currently operates, wherein the type of the target environment includes an underwater environment or a non-underwater environment; and
receiving, in the target communication mode, first target information transmitted by the target robot and forwarding the first target information to a target terminal; and receiving second target information transmitted by the target terminal and forwarding the second target information to the target robot in the target communication mode.

10. The method according to claim 9, wherein the receiving, in the target communication mode, first target information transmitted by the target robot and forwarding the first target information to a target terminal comprises:
receiving a target notification sent by the target robot, wherein the target notification is sent by the target robot after a current communication bit error rate between the target robot and the charging station is determined; and
adjusting a communication rate level based on the target notification, receiving the first target information at a communication rate corresponding to an adjusted communication rate level, and forwarding the first target information to the target terminal.

11. The method according to claim 10, wherein the adjusting a communication rate level based on the target notification comprises:
reducing the communication rate level when the target notification indicates that the current communication bit error rate is greater than a first preset threshold; and
increasing the communication rate level when the target notification indicates that the current communication bit error rate is less than a second preset threshold, wherein the second preset threshold is less than the first preset threshold.

12. The method according to claim 11, wherein the reducing the communication rate level when the target notification indicates that the current communication bit error rate is greater than a first preset threshold comprises:
reducing a communication rate by one level when the target notification indicates that the current communication bit error rate is greater than a first bit error rate threshold; and
reducing the communication rate by two levels when the target notification indicates that the current communication bit error rate is greater than a second bit error rate threshold, wherein the first preset threshold comprises the first bit error rate threshold and the second bit error rate threshold, wherein the second bit error rate threshold is greater than the first bit error rate threshold.

13. The method according to any one of claims 10 to 12, wherein after the adjusting a communication rate level based on the target notification, the method further comprises at least one of the following:
when it is determined that the adjusted communication rate level is less than or equal to a preset level, prompting the target robot and the charging station that it is currently inappropriate to transmit map information;
when it is determined that communication between the target robot and the charging station is disconnected, prompting the target robot and the charging station that there is a communication failure; or
when it is determined that the adjusted communication rate level is greater than the preset level, prompting the target robot and the charging station that current communication is normal.

14. An information interaction system, comprising:
a target robot, wherein the target robot is configured to determine a target communication mode based on a type of a target environment in which the target robot currently operates and establish a communication connection with a charging station in the target communication mode, wherein the type of the target environment comprises an underwater environment and a non-underwater environment; and
the charging station, wherein the charging station is configured to perform information interaction with the target robot in the target communication mode.

15. An information interaction apparatus, comprising:
a first obtaining module, wherein the first obtaining module is configured to obtain a type of a target environment in which a target robot currently operates, wherein the type of the target environment comprises an underwater environment and a non-underwater environment;
a determining module, wherein the determining module is configured to determine a target communication mode based on the type of the target environment, wherein the target communication mode is used to indicate a communication mode between the target robot and a charging station; and
a first control module, wherein the first control module is configured to control the target robot to establish a communication connection with the charging station in the target communication mode and control the target robot to perform information interaction with a target terminal via the charging station.

16. An information interaction apparatus, comprising:
a second control module, wherein the second control module is configured to when a connection request of a target robot is received, control a charging station to establish a communication connection with the target robot, wherein the connection request is used to request that the communication connection is established between the target robot and the charging station in a target communication mode, wherein the target communication mode is a communication mode determined by the target robot based on a type of a target environment in which the target robot currently operates, wherein the type of the target environment comprises an underwater environment and a non-underwater environment; and
a processing module, wherein the processing module is configured to receive, in the target communication mode, first target information transmitted by the target robot and forward the first target information to a target terminal; and receive second target information transmitted by the target terminal and forward the second target information to the target robot in the target communication mode.

17. A computer-readable storage medium, wherein the computer-readable storage medium stores a computer program, and when the computer program is executed by a processor, steps of the method according to any one of claims 1 to 8 or 9 to 13 are implemented.

18. An electronic device, comprising a memory, a processor, and a computer program that is stored in the memory and that is capable of being run on the processor, wherein when executing the computer program, the processor implements steps of the method according to any one of claims 1 to 8 or 9 to 13.
